# EUROPEAN PATENT APPLICATION

(11) **EP 4 609 985 A1**
(43) Date of publication of application: **03.09.2025**
(21) Application number: 23882235.7
(22) Date of filing: 30.08.2023
(51) Int. Cl.: B23K 26/38, B23K 26/082, C03B 33/085

(54) **PIPE-LIKE BODY CUTTING DEVICE AND PIPE-LIKE BODY CUTTING METHOD**

(30) Priority: 28.10.2022 JP 2022173409
(71) Applicant: Nipro Corporation, Osaka-shi, Osaka 531-8510 (JP)
(72) Inventor: SANO, Kazuhiko, Osaka-shi, Osaka 531-8510 (JP); MAEYASU, Yoshito, Osaka-shi, Osaka 531-8510 (JP)
(74) Representative: Forresters IP LLP
(86) International application number: PCT/JP2023/031506
(87) International publication number: WO 2024/090021

(57) **Abstract**

A tubular body cutting device 10 includes: a conveyor 50 configured to convey a tubular body that is continuous, along an axial direction of the tubular body; a measurement unit 200 configured to measure a diameter size of the tubular body and a conveyance speed of the tubular body; and a cutting controller 300 configured to control a laser irradiation unit provided at a radial direction outer side of the tubular body and at a prescribed position in a circumferential direction of the tubular body while being separated from the tubular body. The cutting controller 300 is configured to control an irradiation direction and an irradiation timing of a laser light beam from the laser irradiation unit to the tubular body based on the diameter size and the conveyance speed measured by the measurement unit 200 or held as data calculated in advance.

## Description

### [TECHNICAL FIELD]

The present disclosure relates to a tubular body cutting device and a tubular body cutting method that cut a tubular body such as a glass tube.

### [BACKGROUND ART]

For example, a Danner process is widely used in shaping of medical glass products such as glass ampules and syringes that store injections, nutritional supplements, and the like. In the Danner process, molten glass supplied from a melting furnace is formed into a tubular shape while being wound around a sleeve, and the tubular molten glass is pulled out from a front end of the sleeve to continuously shape a glass tube.

The continuous glass tube shaped by using the Danner process needs to be cut into an appropriate size (length) depending on application. There is known a cutting device that forms an annular crack in the glass tube by irradiating the glass tube with laser light beams and cuts the glass tube at a portion where the crack is formed (Patent Literature 1).

### [CITATION LIST]

### [PATENT LITERATURE]

[Patent Literature 1] International Patent Application Publication No. WO2017/068819

### [SUMMARY OF INVENTION]

However, the cutting device of the glass tube described above requires two-stage cutting and a rotating drive device that rotates the glass tube in the circumferential direction, and the configuration of the cutting device is complex. Accordingly, there is assumed to be a room for improvement from viewpoints of cost, maintenance, and the like.

The following disclosure is made in view of such a circumstance, and an object is to provide a tubular body cutting device and a tubular body cutting method that can cut a tubular body with a laser light beam while adopting a simple configuration.

An aspect of the present disclosure is a tubular body cutting device (glass tube cutting device 10) configured to cut a tubular body, the tubular body cutting device including: a conveyor (conveyor 50) configured to convey the tubular body that is continuous, along an axial direction of the tubular body; a measurement unit (measurement unit 200) configured to measure a diameter size of the tubular body and a conveyance speed of the tubular body; and a cutting controller (cutting controller 300) configured to control a laser irradiation unit (laser irradiation units 110 to 140) provided at a radial direction outer side of the tubular body and at a prescribed position in a circumferential direction of the tubular body while being separated from the tubular body, wherein the cutting controller is configured to control an irradiation direction and an irradiation timing of a laser light beam from the laser irradiation unit to the tubular body based on the diameter size and the conveyance speed measured by the measurement unit or held as data calculated in advance.

An aspect of the present disclosure is a tubular body cutting method of cutting a tubular body by using a tubular body cutting device, the tubular body cutting method including: a step of conveying the tubular body that is continuous, along an axial direction of the tubular body; a step of measuring a diameter size of the tubular body and a conveyance speed of the tubular body; and a step of controlling an irradiation direction and an irradiation timing of a laser light beam from a laser irradiation unit to the tubular body based on the measured diameter size and the measured conveyance speed, the laser irradiation unit provided at a radial direction outer side of the tubular body and at a prescribed position in a circumferential direction of the tubular body while being separated from the tubular body.

### [BRIEF DESCRIPTION OF DRAWINGS]

[Fig. 1] Fig. 1 is an overall schematic perspective diagram of a glass tube cutting device 10.
[Fig. 2] Fig. 2 is a functional block configuration diagram of the glass tube cutting device 10.
[Fig. 3] Fig. 3 is a front diagram of a laser irradiation mechanism 100.
[Fig. 4] Fig. 4 is a front view of a laser irradiation unit 110 alone.
[Fig. 5] Fig. 5 is a diagram illustrating a cutting operation flow of a glass tube W by the glass tube cutting device 10.
[Fig. 6] Fig. 6 is a diagram illustrating an image of scanning with a laser light beam B by the laser irradiation unit 110.
[Fig. 7] Fig. 7 is an explanatory diagram (perspective) of a cutting process of the glass tube W with the laser light beam B.
[Fig. 8] Fig. 8 is an explanatory diagram (plan) of the cutting process of the glass tube W with the laser light beam B.

### [DESCRIPTION OF EMBODIMENTS]

An embodiment is explained below based on the drawings. Note that the same functions and configurations are denoted by the same or similar reference numerals, and explanation thereof is omitted as appropriate.

### (1) Overall Schematic Configuration of Tubular Body Cutting Device

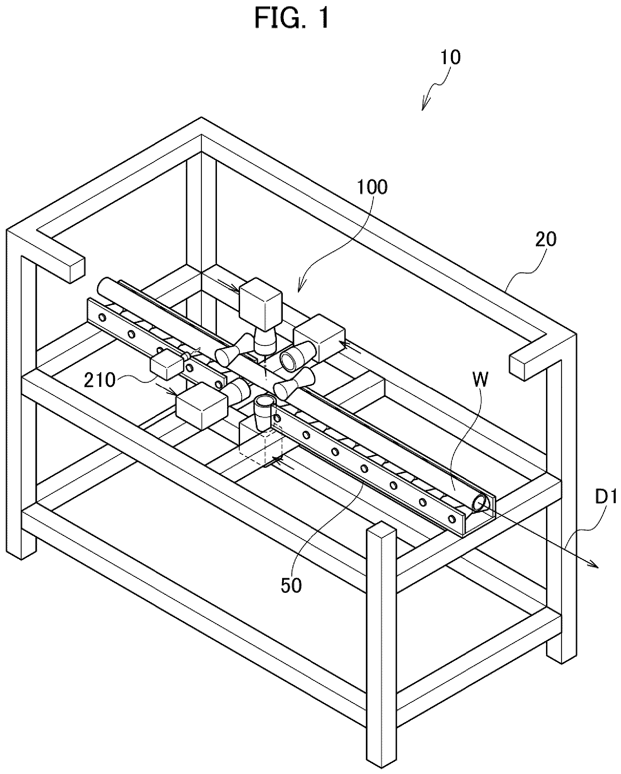

Fig. 1 is an overall schematic perspective diagram of a glass tube cutting device 10 according to the present embodiment. The glass tube cutting device 10 can function as a tubular body cutting device that cuts a tubular body. In the present embodiment, the glass tube cutting device 10 cuts a glass tube continuously shaped by the Danner process into a prescribed size (length).

Note that, although the glass tube is assumed to be shaped by the Danner process in the present embodiment, the process of shaping is not limited to the Danner process. For example, the glass tube may be continuously shaped by using a down-draw process or an up-draw process.

The Danner process is a process in which molten glass supplied from a melting furnace is shaped into a tube shape while being wound around a sleeve, and the molten glass shaped into the tube shape is pulled out from a front end of the sleeve to continuously shape a glass tube.

As illustrated in Fig. 1, the glass tube cutting device 10 includes a chassis 20. A conveyor 50 configured to convey a glass tube W shaped by the Danner process is provided in the chassis 20. Note that a cover may be provided in an upper portion or the like of the chassis 20.

The conveyor 50 conveys the continuous glass tube W (tubular body) along an axial direction (D1) of the glass tube W. The conveyor 50 may include multiple rollers arranged orthogonal to the glass tube W and guide rails provided along the axial direction of the glass tube W.

The conveyor 50 may include lower rollers located below the glass tube W and upper rollers located above the glass tube W. The lower rollers may be drive rollers configured to be driven by a drive source such as a motor, and the upper rollers may be idle rollers configured to freely rotate and provided at positions (at least two positions) where the rollers do not interfere with laser light beams. The conveyor 50 with such a configuration can prevent slip and the like and surely convey the glass tube W even when the weight of the glass tube W is small.

Note that the conveyor 50 does not have to be a unit using rollers, and may be formed of, for example, a caterpillar (endless track). Pulleys (not illustrated) configured to sandwich and pull out the glass tube W may be provided downstream of the conveyor 50.

The glass tube W is a continuous glass tube before being cut into the prescribed length, and may be referred as workpiece or the like. The conveyor 50 can convey the glass tube W continuously shaped by the Danner process at a prescribed conveyance speed (may also be referred to as feeding speed). Although the conveyor 50 can convey the glass tube W continuously shaped by the Danner process, since the conveyance of the glass tube W is continuous with the shaping step of the glass tube W by the Danner process, the conveyor 50 cannot rotate the glass tube W along a circumferential direction.

Moreover, a laser irradiation mechanism 100 is provided in the chassis 20. The laser irradiation mechanism 100 may be formed of multiple laser irradiation units. In the present embodiment, the laser irradiation mechanism 100 is formed of four laser irradiation units arranged around the glass tube W. The laser irradiation units may be fixed at prescribed positions by members (not illustrated) such as stays attached to the chassis 20.

Note that the number of laser irradiation units may be changed depending on a cutting range in the circumferential direction of the glass tube W, and may be, for example, two. Moreover, in the case where only part of the glass tube W in the circumferential direction thereof is cut, the number of laser irradiation units may be one. Furthermore, in the case where a certain level of processing accuracy of cutting portions is required, the number of laser irradiation units may be increased, though this makes control complex.

The laser irradiation mechanism 100 may be formed of one or multiple laser irradiation units as described above, and the laser irradiation units may be connected to laser oscillators (not illustrated). Input ends from the laser oscillators to the laser irradiation units may be provided, for example, along the directions illustrated by the arrows in Fig. 1.

The laser oscillators (may include chillers) are not limited to particular oscillators, and for example, CO₂ lasers, fiber lasers, ultrashort pulse lasers, ultrafast lasers, or the like with light output of about 100 W and a wavelength of about 10 µm may be used. Although the diameter size and the thickness of the glass tube W to be processed (cut) are not limited to particular diameter size and thickness, the diameter size (outer diameter) is generally assumed to be about 2 to 40 mm, and the thickness (wall thickness) is assumed to be about 0.4 to 3.0 mm.

A size sensor 210 is provided upstream of the laser irradiation mechanism 100. The size sensor 210 measures the diameter size (outer diameter) of the glass tube W. A sensor capable of measuring a displacement range (distance, thickness, height, and the like) by using laser light may be used as the size sensor 210. The size sensor 210 may be fixed at a prescribed position by a member (not illustrated) such as a stay attached to the chassis 20.

Note that Fig. 1 illustrates only the main components of the glass tube cutting device 10, and illustration of the laser oscillators, optical parts for transmitting laser light beams (laser beams) from the laser oscillators to the laser irradiation units forming the laser irradiation mechanism 100, hardware elements (computer apparatus, control board, and the like) for controlling the laser irradiation mechanism 100, a power supply unit, and the like is omitted.

### (2) Functional Block Configuration of Tubular Body Cutting Device

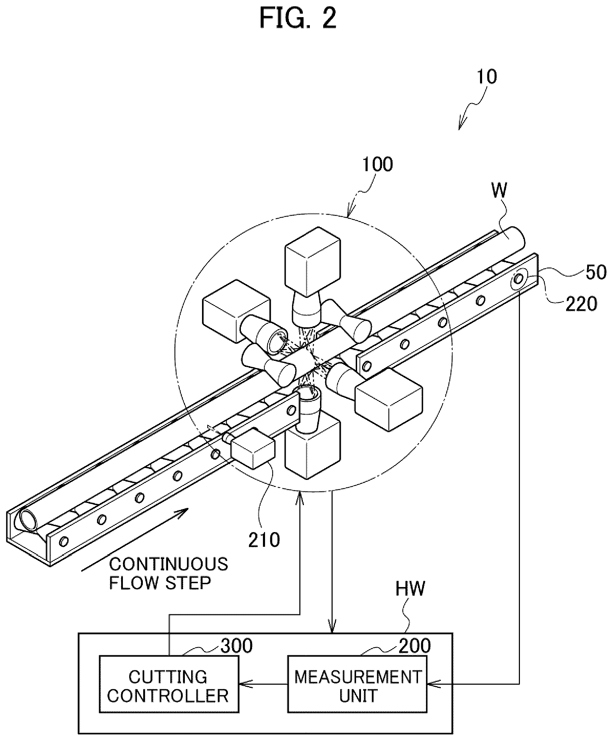

Fig. 2 is a functional block configuration diagram of the glass tube cutting device 10 forming the tubular body cutting device in the present embodiment. As illustrated in Fig. 2, the glass tube cutting device 10 includes a measurement unit 200 and a cutting controller 300.

The measurement unit 200 measures the diameter size (outer diameter) of the glass tube W and the conveyance speed of the glass tube W. Specifically, the measurement unit 200 is connected to the size sensor 210 and a rotary encoder 220 provided in the conveyor 50.

The size sensor 210 measures the diameter size (outer diameter) of the glass tube W as described above. Specifically, the size sensor 210 can output the laser light and measure the height of the glass tube W from a prescribed position set in advance.

Data on the diameter size (outer diameter) of the glass tube W to be processed may be held in advance by the measurement unit 200 or the cutting controller 300, or the diameter size may be determined from the measured height. This allows a position (height) of a surface of the glass tube W to be processed by each laser light beam from the laser irradiation mechanism 100 to be determined. Moreover, the size sensor 210 can measure a distance from each of laser light beam output points of the laser irradiation mechanism 100 to the surface of the glass tube W.

The glass tube W is basically transparent (or translucent), and measurement of the conveyance speed of the glass tube W conveyed by the conveyor 50 is difficult in some cases. The rotary encoder 220 detects the number of revolutions of the pulleys (not illustrated) provided downstream of the conveyor 50. Note that a rotating shaft of the rotary encoder 220 is provided to rotate with the pulleys. The measurement unit 200 can determine whether the glass tube W is in a conveyed state or not, and measure the conveyance speed of the glass tube W based on an output signal (encode value) from the rotary encoder 220.

The cutting controller 300 controls the laser irradiation mechanism 100 to cut the glass tube W into a prescribed length. Specifically, the cutting controller 300 controls the multiple laser irradiation units, and emits laser light beams, to the glass tube W in the conveyed state, along directions intersecting the axial direction (D1) of the glass tube W. The laser light beams from the respective laser irradiation units are emitted to cover the entire circumference of the glass tube W in a shared manner.

The cutting controller 300 controls irradiation directions and irradiation timings of the laser light beams from the laser irradiation units to the glass tube W based on the diameter size and the conveyance speed of the glass tube W measured by the measurement unit 200 or held as data calculated in advance. The irradiation directions of the laser light beams can be changed in the axial direction (D1) and the circumferential direction of the glass tube W within a prescribed range. Moreover, the irradiation timings (ON/OFF) of the laser light beams can be also controlled at an extremely-short interval (for example, equal to or shorter than several milliseconds). Note that the configuration and operations of the laser irradiation units are described later.

The cutting controller 300 may include software such as a program configured to control the laser irradiation units. The measurement unit 200 and the cutting controller 300 may implemented by executing a software (may include firmware and the like) program on hardware elements HW including a computer, a control board, and the like. Moreover, the hardware elements HW may include, for example, a control device (micro control unit: MCU) configured to read the encode value from the rotary encoder 220 and output a control signal for controlling the laser irradiation units.

### (3) Configuration of Laser Irradiation Mechanism 100

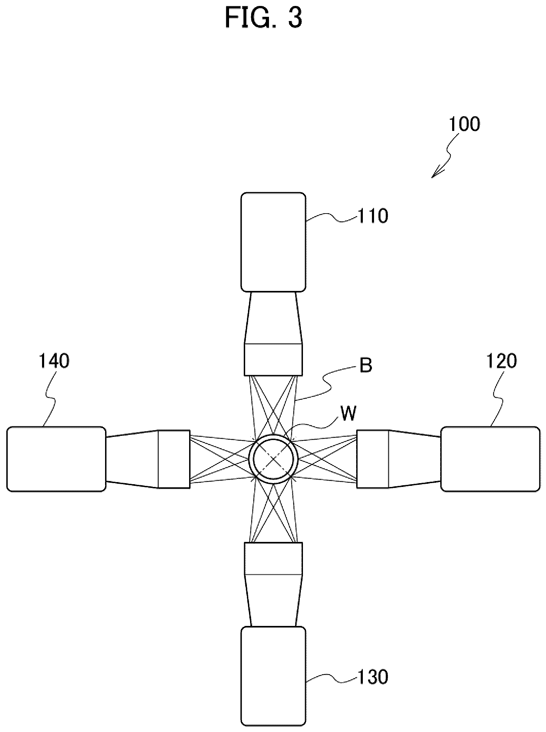

Fig. 3 is a front diagram of the laser irradiation mechanism 100. Specifically, Fig. 3 is a front diagram of the laser irradiation mechanism 100 viewed from the downstream side of the conveyor 50 along the axial direction (D1) of the glass tube W. As illustrated in Fig. 3, the laser irradiation mechanism 100 includes four laser irradiation units, specifically, a laser irradiation unit 110, a laser irradiation unit 120, a laser irradiation unit 130, and a laser irradiation unit 140.

The laser irradiation unit 110, the laser irradiation unit 120, the laser irradiation unit 130, and the laser irradiation unit 140 are provided at prescribed positions in the circumferential direction of the glass tube W (tubular body) on the radial direction outer side of the glass tube W while being separated from the glass tube W. Note that four laser irradiation units are provided to process the tubular body with a processed portion divided into four sections, and the number of laser irradiation units may be increased or reduced depending on the number of divided sections.

In the present embodiment, the four laser irradiation units are used such that laser light beams B can cover the entire circumference of the glass tube W. Although the number of laser irradiation units are not limited to a particular number as described above, the laser irradiation mechanism 100 preferably includes three or more laser irradiation units from the viewpoint of covering the entire circumference of the glass tube W. Specifically, it is preferable that the cutting controller 300 (see Fig. 2) can control three or more laser irradiation units.

The laser light beams B are formed from the laser irradiation unit 110, the laser irradiation unit 120, the laser irradiation unit 130, and the laser irradiation unit 140, respectively, and are focused on the surface of the glass tube W.

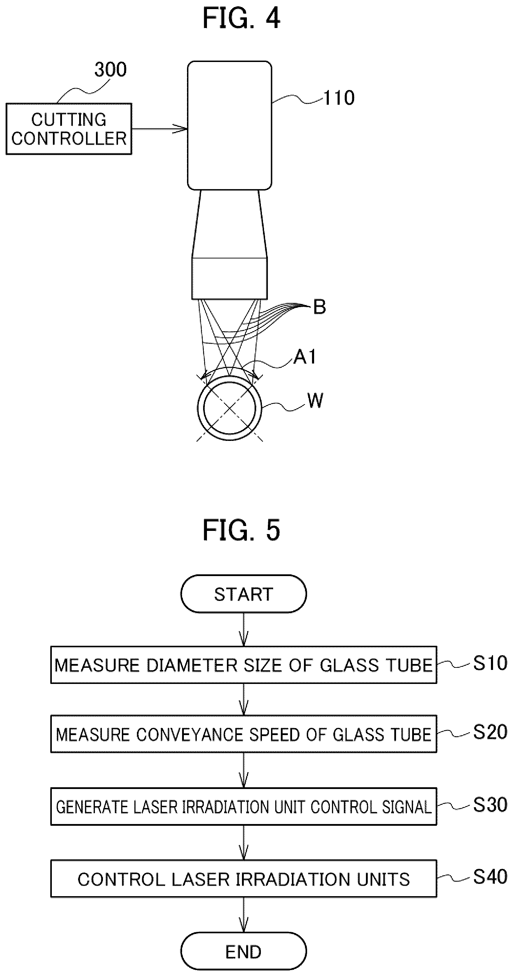

Fig. 4 is a front view of the laser irradiation unit 110 alone. Note that the laser irradiation unit 120, the laser irradiation unit 130, and the laser irradiation unit 140 may also have the same configuration and functions as the laser irradiation unit 110.

As illustrated in Fig. 4, the laser irradiation unit 110 internally includes a galvanometer mirror, and can change the irradiation direction of the laser light beam B. Specifically, the laser irradiation unit 110 changes the irradiation direction of the laser light beam B at a value obtained by calculating a laser irradiation height in a range of an area A1 along the circumferential direction of the glass tube W based on control from the cutting controller 300. The laser irradiation unit 110 can perform sweeping of the irradiation direction of the laser light beam B with a main body (head) of the laser irradiation unit 110 itself fixed. Moreover, the irradiation direction of the laser light beam B can be changed not only along the circumferential direction of the glass tube W but also along the axial direction of the glass tube W.

Note that it can be interpreted that scanning with the laser light beam B is performed, and the laser irradiation mechanism 100 including four laser irradiation units 110 (may be referred to as scanner units) can perform scanning with the laser light beams B in any direction in a three-dimension space reflecting the height. A specific example of a scanning (sweeping) range of the laser light beam B is described later. Note that, in the following explanation, term "scanning" is mainly used.

Commercially-available scanner units can be used as the laser irradiation units 110 to 140. For example, units that embody three axes of X, Y, and Z are preferable as the scanner units.

The cutting controller 300 can continuously change each of the irradiation directions of the laser light beams B in the circumferential direction of the glass tube W and the axial direction of the glass tube W based on the diameter size and the conveyance speed of the glass tube W. Each of the irradiation directions of the laser light beams B may be changed simultaneously in both of the circumferential direction and the axial direction of the glass tube W, or only in one of the circumferential direction and the axial direction.

Specifically, the cutting controller 300 can make a focal position of each laser light beam B follow the glass tube W based on the diameter size measured by the measurement unit 200 (see Fig. 2). Although the glass tube W in the conveyed state vibrates to some extent, since a focal distance of the laser light beam B is provided with a certain depth, the laser light beam B can be constantly focused even when the glass tube W vibrates to some extent.

Moreover, the cutting controller 300 can control the multiple laser irradiation units 110 to 140 provided at different positions in the circumferential direction of the glass tube W, and synchronize the irradiation directions and the irradiation timings of the laser light beams B from the multiple laser irradiation units. Specifically, the cutting controller 300 controls the irradiation directions and the irradiation timings of the laser light beams B from the respective laser irradiation units 110 to 140, and performs linear scanning with the laser light beams B reflecting the height intersecting the axial direction (D1) of the glass tube W conveyed by the conveyor 50.

As described above, the cutting controller 300 can control the irradiation directions and the irradiation timings of the laser light beams B from the respective laser irradiation units 110 to 140, and cut the glass tube W while performing scanning with the laser light beams B along the circumferential direction of the glass tube W.

A linear cut surface along a circumference orthogonal to the axial direction of the glass tube W can be thereby formed. Note that a linear cut surface along a circumference intersecting the axial direction of the glass tube W at any angle or a cut surface with a waveform or the like may be formed by even more accurate control of the laser light beams B. However, this increases complexity of the control of the laser irradiation units.

The scanning range of the laser light beam B from each of the four laser irradiation units, specifically, the laser irradiation unit 110, the laser irradiation unit 120, the laser irradiation unit 130, and the laser irradiation unit 140 may be a partial area of the glass tube W in the circumferential direction thereof. In other words, the laser light beams B from the multiple laser irradiation units may irradiate different areas of the glass tube W in the circumferential direction thereof, respectively.

For example, the scan range of the laser light beam B from the laser irradiation unit 110 may be the area A1. In the case where four laser irradiation units are used as in the present embodiment, the area A1 may be a range of 90 degrees in the circumferential direction of the glass tube W. In the case where three laser irradiation units are used to cover the entire circumference, the area A1 may be a range of 120 degrees in the circumferential direction of the glass tube W.

### (4) Operations of Tubular Body Cutting Device

Next, operations of the glass tube cutting device 10 forming the tubular body cutting device in the present embodiment are explained.

### (4.1) Overall Schematic Operation

Fig. 5 illustrates a cutting operation flow of the glass tube W by the glass tube cutting device 10. As illustrated in Fig. 5, the glass tube cutting device 10 measures the diameter size (outer diameter) of the glass tube W or uses the data calculated in advance and held by the measurement unit 200 or the cutting controller 300 (S10). Specifically, the measurement unit 200 of the glass tube cutting device 10 obtains the diameter size of the glass tube W conveyed by the conveyor 50 based on the output signal from the size sensor 210 (see Figs. 1 and 2).

As described above, the diameter size (outer diameter) of the glass tube W is assumed to be about 2 to 40 mm. Note that a scanning speed (moving speed) of the laser light beams B, particularly a scanning speed in the circumferential direction of the glass tube W may be changed depending on the diameter size of the glass tube W.

Moreover, the glass tube cutting device 10 measures the conveyance speed of the glass tube W (S20). Specifically, the measurement unit 200 of the glass tube cutting device 10 measures the conveyance speed of the glass tube W conveyed by the conveyor 50 based on the output signal from the rotary encoder 220. Note that the operations of S10 and S20 may be executed in the reverse order, or simultaneously executed.

Although the conveyance speed of the glass tube W is not limited to a particular speed, the conveyance speed is assumed to be about 1 m/sec to 4 m/sec in the present embodiment.

The glass tube cutting device 10 generates the control signal of the laser irradiation units based on the measured diameter size and conveyance speed of the glass tube W (S30). Specifically, the cutting controller 300 of the glass tube cutting device 10 generates the control signal for controlling the irradiation height, the irradiation direction, and the irradiation timing of the laser light beam B from each of the laser irradiation units 110 to 140, based on the diameter size and the conveyance speed of the glass tube W.

The cutting controller 300 may generate the control signal that causes the scanning with the laser light beam B to be performed in a linear form orthogonal to the axial direction (D1) of the glass tube W conveyed by the conveyor 50 as described above.

Alternatively, the cutting controller 300 may generate a control signal that causes the scanning with the laser light beam B to be performed in a linear form, a waveform, or the like intersecting the axial direction of the glass tube W at any angle.

The cutting controller 300 controls the laser irradiation units 110 to 140 by using the generated control signal (S40). Specifically, the cutting controller 300 controls the laser irradiation unit 110, the laser irradiation unit 120, the laser irradiation unit 130, and the laser irradiation unit 140 simultaneously to irradiate the entire circumference of the glass tube W with the laser light beams B. The cut surface in the direction intersecting the axial direction of the glass tube W can be thereby formed.

### (4.2) Control of Laser Irradiation Unit

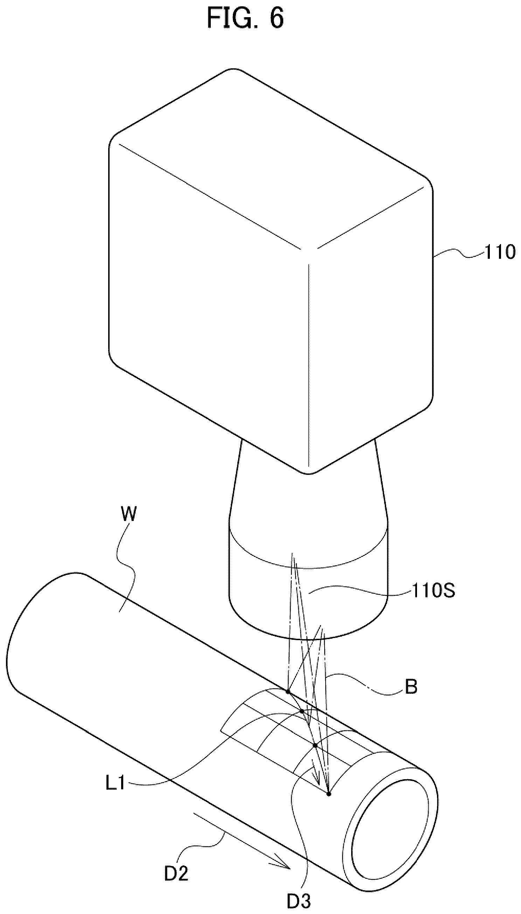

Fig. 6 illustrates an image of the scanning with the laser light beam B by the laser irradiation unit 110. As illustrated in Fig. 6, the irradiation direction of the laser light beam B can be continuously changed in the circumferential direction of the glass tube W and the axial direction of the glass tube W.

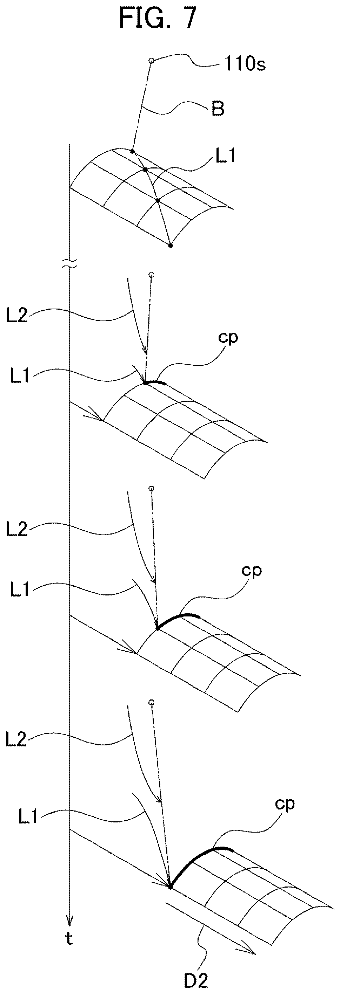

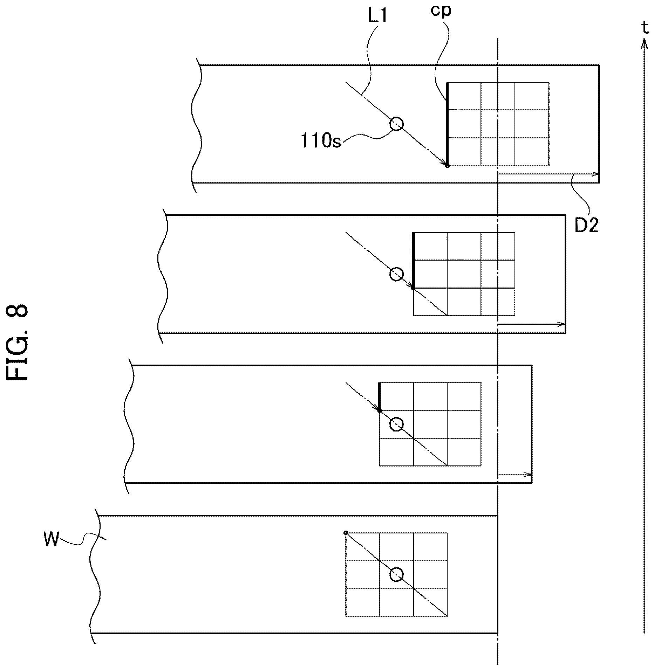

The glass tube W is conveyed in a D2 direction in the drawings. In Fig. 6, a lattice pattern illustrated on a circumferential surface of the glass tube W is a display for the sake of convenience for illustrating a scanning line L1 of the laser light beam B from an output point 110s of the laser irradiation unit 110 on the circumferential surface of the glass tube W (same applies to Figs. 7 and 8). Scanning with the laser light beam B is performed along the conveyance direction of the glass tube W and the circumferential direction of the glass tube W, specifically obliquely along a D3 direction in the drawings, in synchronization with the conveyance speed of the glass tube W.

In the present embodiment, the scanning range of the laser light beam B in the axial direction (conveyance direction) of the glass tube W is assumed to be 10 mm to 300 mm. A focal diameter of the laser light beam B may be 100 µm to 200 µm. Moreover, the focal distance of the laser light beam B is assumed to be 130 mm to 300 mm. The focal distance is preferably set as short as possible, in consideration of a decrease in energy density.

The scanning speed of the laser light beam B is assumed to be about 1 m/sec to 4 m/sec. The scanning speed of the laser light beam B is preferably identical to the conveyance speed of the glass tube W. Moreover, the scanning speed of the laser light beam B is preferably as low as possible, in consideration of processing accuracy (cutting accuracy) of the glass tube W.

Fig. 7 is an explanatory diagram (perspective) of a cutting process of the glass tube W with the laser light beam B. Fig. 8 is an explanatory diagram (plan) of the cutting process of the glass tube W with the laser light beam B.

The scanning with the laser light beam B emitted from the output point 110s of the laser irradiation unit 110 is performed obliquely along the conveyance direction of the glass tube W and the circumferential direction of the glass tube W. Specifically, the laser light beam B moves along a trajectory L2, and forms the scanning line L1 on the circumferential surface of the glass tube W.

As illustrated in Figs. 7 and 8, since the glass tube W is conveyed at the constant speed (for example, 1 m/sec), the glass tube W can be processed (cut) linearly along the circumference orthogonal to the axial direction of the glass tube W. Specifically, during the conveyance of the continuous glass tube W (tubular body) along the axial direction, the tubular body can be cut while an optical system is used to move the laser along the circumference orthogonal to the axial direction. As a result, a linear cut portion cp is formed in the glass tube W along the circumference orthogonal to the axial direction of the glass tube W.

Although the scanning with the laser light beam B by the laser irradiation unit 110 is explained in Figs. 6 to 8, the laser irradiation unit 120, the laser irradiation unit 130, and the laser irradiation unit 140 process other areas of the glass tube W in the circumferential direction thereof like the laser irradiation unit 110.

Note that the cut portion cp may be in a state where the glass tube W is completely cut over the entire circumference or in a state where the glass tube W is partially cut in the circumferential direction (may include hole opening, groove or crack formation, or the like). Since an irradiation angle of the laser light beam B varies in the circumferential direction of the glass tube W, a cross section of the cut portion cp is tilted to some extent in some cases, and the cross section of the cut portion cp may be subjected to a process such as polishing as necessary.

### (5) Operations and Effects

According to the above-mentioned embodiment, the following operations and effects are obtained. Specifically, the glass tube cutting device 10 includes the measurement unit 200 configured to measure the diameter size (outer diameter) of the glass tube W and the conveyance speed of the glass tube W and the cutting controller 300 configured to control the irradiation direction and the irradiation timing of each of the laser light beams B from the laser irradiation units 110 to 140 to the glass tube W based on the diameter size and the conveyance speed of the glass tube W measured by the measurement unit 200 or held as data calculated in advance. The laser irradiation units 110 to 140 are provided at prescribed positions in the circumferential direction of the glass tube W (tubular body) on the radial direction outer side of the glass tube W while being separated from the glass tube W.

Accordingly, there is no need to rotate the glass tube W in the circumferential direction or to perform two-stage cutting as in the cutting device described in the background art. The glass tube cutting device 10 can cut the glass tube W shaped by the Danner process or the like into the prescribed length with the laser light beams B in one cutting operation while conveying the glass tube W. In other words, the glass tube cutting device 10 can cut the glass tube W with the laser light beams B while adopting a simple configuration.

In the present embodiment, the cutting controller 300 can continuously change the irradiation directions of the laser light beams B in the circumferential direction of the glass tube W and the axial direction of the glass tube W, based on the diameter size and the conveyance speed of the glass tube W. Accordingly, it is possible to perform cutting with a high degree of freedom such as linearly cutting the glass tube W in the conveyed state along the circumference orthogonal to the axial direction of the glass tube W.

In the present embodiment, the cutting controller 300 can control the laser irradiation units 110 to 140 provided at the different positions in the circumferential direction of the glass tube W, and synchronize the irradiation directions and the irradiation timings of the laser light beams B from the multiple laser irradiation units. Accordingly, a uniform cut surface with no steps can be easily formed over the entire circumference of the glass tube W.

In the present embodiment, the laser light beams B from the laser irradiation units 110 to 140 may be delivered to different areas of the glass tube W in the circumferential direction thereof, respectively. Accordingly, the positions of the laser irradiation units may be fixed, and a mechanism for moving the laser irradiation units is unnecessary. Furthermore, since the area to be covered by each of the laser irradiation units 110 to 140 is limited, processing with higher accuracy can be performed in this area.

In the present embodiment, the cutting controller 300 can control three or more laser irradiation units. Accordingly, the area to be covered by each laser irradiation unit is limited, and processing with even higher accuracy can be thus performed in this area.

### (6) Other Embodiments

Although the embodiment has been explained above, the present disclosure is not limited to the description of the embodiment, and it is apparent to those skilled in the art that various modifications and improvements can be made.

For example, although the positions of the laser irradiation units 110 to 140 are fixed in the above-mentioned embodiment, some or all of the laser irradiation units may be movable in at least one of the axial direction and the circumferential direction of the glass tube W. In the case where the laser irradiation units are movable, the scanning range of the laser light beam B can be made relatively smaller.

Although the example in which the glass tube W, that is the cylindrical glass is cut is explained in the above-mentioned embodiment, the workpiece does not have to have a cylindrical shape, and the cross section of the workpiece may have an elliptic shape or a quadrilateral shape. Moreover, the workpiece is not limited to glass, and a tubular body or a cylindrical body made of a material such as a metal or a resin may be the target of processing (cutting).

Although the size sensor 210 configured to measure the diameter size (outer diameter) of the glass tube W is provided in the above-mentioned embodiment, the laser irradiation mechanism 100 may double as the size sensor 210 in the case where conditions and the like are met. In other words, the laser irradiation mechanism 100 may be used for both of the measurement of the diameter size of the glass tube W and the cutting of the glass tube W.

Although the present disclosure has been explained above in detail, it is apparent to those skilled in the art that the present disclosure is not limited to the embodiment explained in the present disclosure. The present disclosure can be carried out as amended and modified modes without departing from the sprit and scope of the present disclosure defined by description of the scope of claims. Accordingly, a purpose of the description of the present disclosure is to explain examples, and the description does not have any limiting meaning to the present disclosure at all.

### [REFERENCE SIGNS LIST]

- 10: glass tube cutting device
- 20: chassis
- 50: conveyor
- 100: laser irradiation mechanism
- 110, 120, 130, 140: laser irradiation units
- 110s: output point
- 200: measurement unit
- 210: size sensor
- 220: rotary encoder
- 300: cutting controller
- A1: area
- B: laser light beam
- cp: cut portion
- HW: hardware element
- L1: scanning line
- L2: trajectory
- W: glass tube

## Claims

1. A tubular body cutting device configured to cut a tubular body, the tubular body cutting device comprising:
a conveyor configured to convey the tubular body that is continuous, along an axial direction of the tubular body;
a measurement unit configured to measure a diameter size of the tubular body and a conveyance speed of the tubular body; and
a cutting controller configured to control a laser irradiation unit provided at a radial direction outer side of the tubular body and at a prescribed position in a circumferential direction of the tubular body while being separated from the tubular body, wherein
the cutting controller is configured to control an irradiation direction and an irradiation timing of a laser light beam from the laser irradiation unit to the tubular body based on the diameter size and the conveyance speed measured by the measurement unit or held as data calculated in advance.

2. The tubular body cutting device according to claim 1, wherein the cutting controller is configured to continuously change the irradiation direction of the laser light beam in the circumferential direction of the tubular body and the axial direction of the tubular body based on the diameter size and the conveyance speed.

3. The tubular body cutting device according to claim 1 to 2, wherein the cutting controller is configured to:
control a plurality of the laser irradiation units provided at different positions in the circumferential direction of the tubular body; and
synchronize the irradiation directions and the irradiation timings of the laser light beams from the plurality of the laser irradiation units.

4. The tubular body cutting device according to claim 3, wherein the laser light beams from the plurality of the laser irradiation units are delivered to different areas of the tubular body in the circumferential direction of the tubular body, respectively.

5. The tubular body cutting device according to claim 3, wherein the cutting controller is configured to control three or more of the laser irradiation units.

6. The tubular body cutting device according to claim 1, wherein the cutting controller is configured to cut the tubular body while performing scanning with the laser light beam along the circumferential direction of the tubular body.

7. A tubular body cutting method of cutting a tubular body by using a tubular body cutting device, the tubular body cutting method comprising:
a step of conveying the tubular body that is continuous, along an axial direction of the tubular body;
a step of measuring a diameter size of the tubular body and a conveyance speed of the tubular body; and
a step of controlling an irradiation direction and an irradiation timing of a laser light beam from a laser irradiation unit to the tubular body based on the measured diameter size and the measured conveyance speed, the laser irradiation unit provided at a radial direction outer side of the tubular body and at a prescribed position in a circumferential direction of the tubular body while being separated from the tubular body.

8. The tubular body cutting method according to claim 7, comprising a step of cutting the tubular body while using an optical system to move the laser along a circumference orthogonal to the axial direction during conveyance of the tubular body that is continuous, along the axial direction.
